# EUROPEAN PATENT SPECIFICATION

(11) **EP 1 393 206 B1**
(45) Date of publication and mention of the grant of the patent: **18.01.2006**
(21) Application number: 02718074.4
(22) Date of filing: 01.02.2002
(51) Int. Cl.: G06F 17/30

(54) **DATA STRUCTURE FOR INFORMATION SYSTEMS**
DATENSTRUKTUR FÜR INFORMATIONSSYSTEME
STRUCTURE DE DONNEES POUR SYSTEMES D'INFORMATION

(30) Priority: 01.02.2001 DE 10104831
(43) Date of publication of application: 03.03.2004
(73) Proprietor: SAP AG, 69190 Walldorf (DE)
(72) Inventor: VON BERGEN, Axel, 69168 Wiesloch (DE); SCHWARZ, Arne, 69115 Heidelberg (DE); SAUERMANN, Volker, 69120 Heidelberg (DE)
(86) International application number: PCT/EP2002/001026
(87) International publication number: WO 2002/061612

(56) References cited:
- EP-A- 0 657 830
- US-A- 5 355 473
- US-A- 5 557 786
- US-A- 5 737 732
- THEO HÄRDER, ERHARD RAHM: "Datenbanksysteme" 1999 , SPRINGER , HEIDELBERG XP002238738 page 207, line 24 -page 210, line 14 page 227 -page 233 figure 7.15 figure 8.1 figure 8.2.B
- DATE C J : "INTRODUCTION TO DATABASE SYSTEMS, Vol. 1" 1990 , ADDISON WESLEY , READING, MA, US XP002238012 paragraph [03.6] figures 3.17,3.18

## Description

The invention relates to a data structure for information storage systems, such as database systems. In computer based data storage systems, data is stored in and retrieved from some medium, such as a memory and a hard disk drive. In known systems, the data is stored in a data structure such as for example a structure based on the relational model. Although data stored using the known data storage systems can be stored, searched and retrieved, the time required for the retrieval can be considerable, especially in case of complex queries. Furthermore, constructing an efficient data model is complicated and therefore costly. Once a database layout or data model is defined, later alterations are difficult to implement, and almost always lead to loss of performance.

To speed up response time for queries into the database, often a query optimiser is used, for example a rule based optimiser or a cost based optimiser. The rule based optimiser uses a set of predefined rules. The cost based optimiser uses statistical information about the data to structure queries, by estimating the selectivity of each query component and leading the search path along the most selective components first. Even though using the known optimisers can shorten the average response time, the need exists for optimisers that optimise each specific query.

According to the book "Data Structures & Their Algorithms", ISBN 0-673-39736-X, a person skilled in the art may use a further approach to store and retrieve the data by representing the data by a tree structure. Such a representation may include to break the data into parts and to identify a node of the tree with a part. It is convenient to use a binary tree structure for the representation because the binary tree structure allows for a fast retrieval of the parts of the data. Furthermore the binary tree structure may be balanced so that the number of levels beneath the root node is small and the retrieval of the parts includes few steps.

A goal of the invention is to provide a data storage system that is easy to set up and maintain. Another goal is to provide a data storage system that allows fast retrieval of data. Another goal of the invention is to provide a data storage system in which a query can be deterministically optimised.

These goals are met by providing a database system according to claim 1.

By using the structure as claimed, a database can be build easily, while alterations are easily performed.

Furthermore, the invention provides for a query optimiser according to claim 6. By determination of actual data elements that are found within a query section, a deterministic analysis of the actual query path for the specific query can be made. Therefore the best path for each query can be determined, leading to optimum query times for each query.

Additional features and advantages will become appearant in the following description of an embodiment of the invention. Advantageous variants are subject of the dependent claims.

### Brief Description of the Drawings

- Figure 1: shows schematically the hierarchical structure of the system according to the invention,
- Figure 2: shows a data type according to the invention,
- Figure 3: shows an InfoType structure with an anchor and an InfoCell,
- Figure 4: shows two InfoCells according to the invention,
- Figure 5: shows an InfoCluster with three InfoTypes in a binary tree configuration,
- Figure 6: shows an InfoCourse as a binary tree, sorted by the InfoType - Identification number,
- Figure 7: shows a sub structure of 4-dimensionally linked InfoCell elements with a table of the represented content,
- Figure 8: shows a double link Self Ring with numbers the element counter of the ring,
- Figure 9: shows a number for the element counter of a multi dimensional structure,
- Figure 10: shows a table as a 6 dimensional structure,
- Figure 11: shows cascading InfoBridges,
- Figure 12: shows an InfoBridge with eight flags,
- Figure 13: shows an example of a tree structure,
- Figure 14: shows a simplification of Fig. 13,
- Figure 15: shows a first example,
- Figure 16: shows a second example,
- Figure 17: shows a third example,
- Figure 18: shows the example from Fig. 17,
- Figure 19: shows the example from Fig. 17,
- Figure 20: shows the example from Fig. 17,
- Figure 21: shows a fourth example,
- Figure 22: shows a fifth example, and
- Figure 23: shows a sixth example.

### Detailed Description

In the following an example of an embodiment of a data storage system according to the invention is described. The following examples of embodiments of the invention, are implemented according to a relational database model. The system according to the invention is not limited to use within the constraints of a known relational database architecture. It is however possible to implement the invention mainly according to the rules of a relational database. The elements of the invention roughly translate to the known nomenclature of the relational database theory as follows (with the definitions according to the invention on the left):

| | |
|---|---|
| InfoSystem | ← Management System |
| InfoArea | ← Database |
| InfoCluster | ← Table |
| InfoType | ← Attribute |
| InfoCourse | ← Data record |
| InfoCell | ← Field |
| InfoBridge | ← not available |

| | |
|---|---|
| Note that for the InfoBridge (which will be described hereinafter) according to the invention no counterpart exists within the relational database field. | |

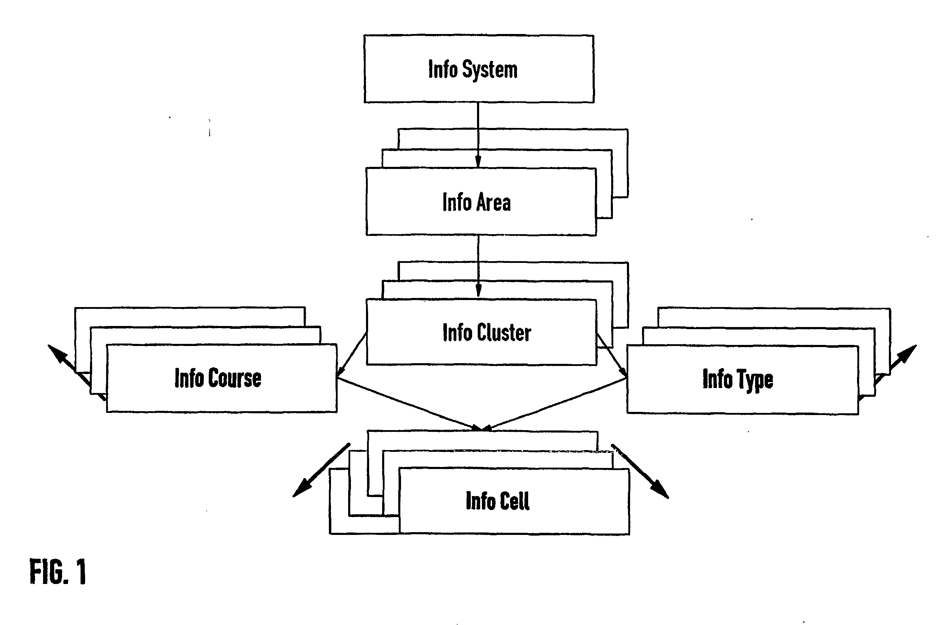

In fig. 1 a diagram is shown of the static hierarchy of a data system according to the invention. The highest level in the data system is the InfoSystem level. Down from the top level one or more InfoAreas are connected to the InfoSystem. The InfoSystem provides the system in run time with the algorithms necessary to operate the system. The InfoSystem is connected to any number of InfoAreas through a linking element, which will be described hereinafter as an anchor. These InfoAreas can for example refer to logical units of the InfoSystem.

Each InfoArea is connected via a linking element (again an anchor as described hereinafter) to an InfoCluster. In turn, each InfoCluster is connect to at least one InfoCourse and at least one InfoType, through respective linking elements such as anchors. The InfoType can be seen as an attribute of a table; an InfoCourse starts always in an InfoCluster. If an InfoCourse stays within an InfoCluster with its addressed InfoCell elements, that correspond with a field of a table, then it is similar to a record of a table.

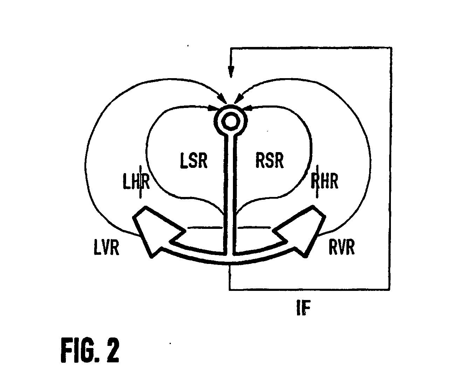

Under the InfoCourse and the InfoType the InfoCell is found; this is the element on the lowest level in the hierarchical structure. On the creation of an instance of InfoType an anchor is created that is an instance of the type InfoCell also. This anchor has the function to represent the structure of following InfoCell elements (see Fig. 2). The anchor has, just as the InfoCell information carrier, seven pointers as will be explained.

For the implementation of the levels below the InfoArea, i.e. the InfoCluster, the InfoCourse, the InfoType and the InfoCell use is made of a data element according to the invention as shown in fig. 2. The data element is shown schematically as an anchor, and is provided with a number of pointers. In this example the data element has three pairs and one single pointer. In the initial state as shown in fig. 2 all pointers point to the anchor. This initial states is also the simplest of possible ring structures. Every pointer in the structure has a valid address, and cases of a non defined pointer (nil pointer) are avoided.

The pointers of the first pair are labelled LVR and RVR (Left Vertical Ring, respectively Right Vertical Ring), the pointers of the second pair are labelled LHR and RHR (Left Horizontal Ring, respectively Right Horizontal Ring), the pointers of the third pair are labelled LSR and RSR (Left Self Ring, resp. Right Self Ring), and the single pointer is labelled IF (InFormation bridge). Note that the pointers LSR, RSR and IF are in principle optional.

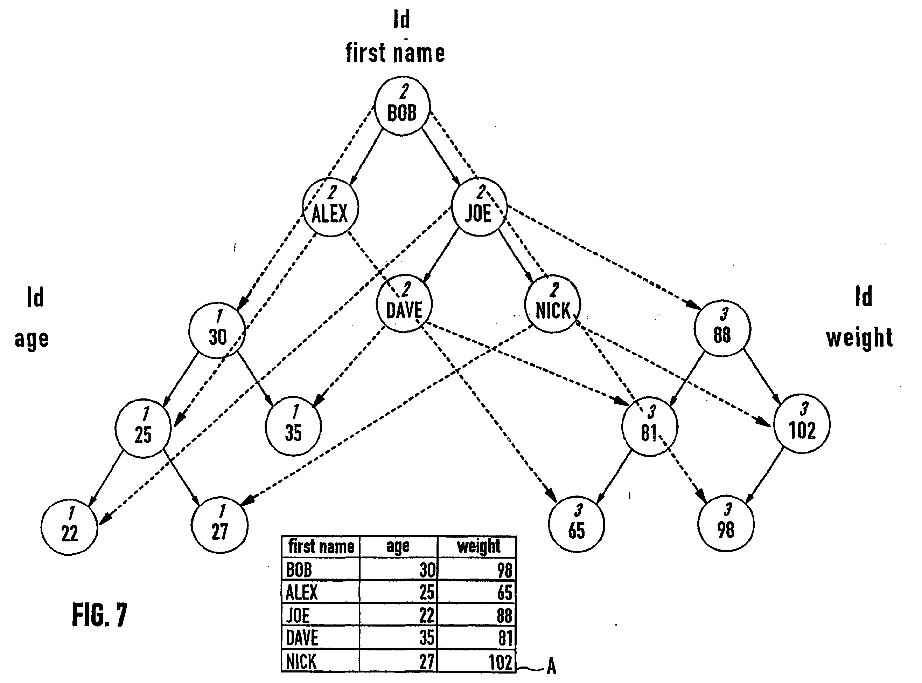

In fig. 7 a table A is shown, containing data regarding first names, ages and weights. For this table an InfoCluster is generated. Furthermore, three InfoTypes are generated to represent respectively first names, ages, and weights.

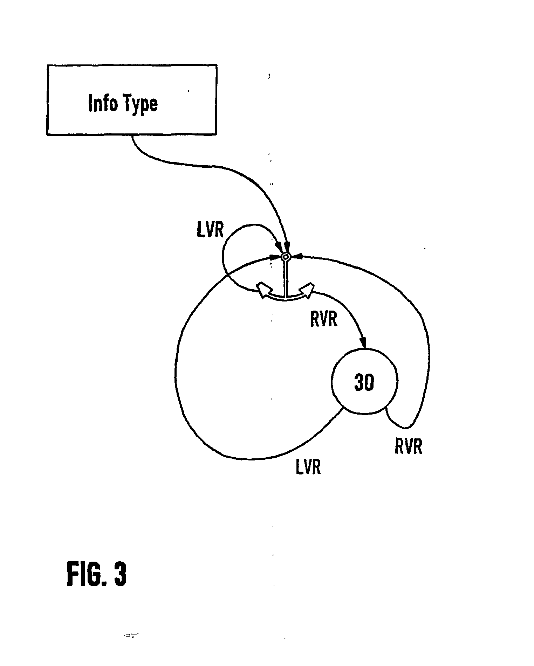

In Fig. 3 the use of the data element is shown for the implementation of the InfoType. In the InfoType semantic information is comprised such as the data type (in this example "INTEGER"), indication (in this example "age")), etc. The InfoType is an anchor associated with the InfoType. The anchor points with its RVR pointer to the actual information carrier, that is the InfoCell. The InfoCell is as described above the lowest level entity within the data system. The InfoCell holds the information, as shown in Fig. 3; in this example "age is 30 in INTEGER".

The InfoCell is as described above provided with a LVR/RVR pointer pair. As shown in Fig. 3, the RVR pointer of the InfoCell points towards the anchor, and also the LVR pointer points to the anchor. As a result, the ring configuration of the anchor is maintained.

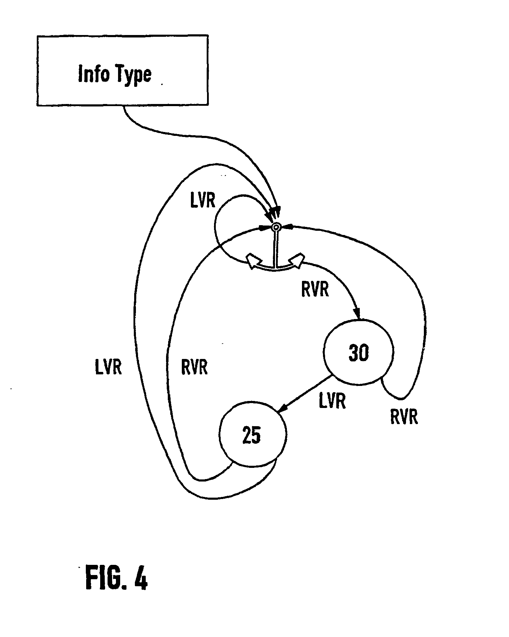

In Fig. 4 is shown how a further InfoCell is added to the data structure. The InfoCell (with the value "25") is inserted in the LVR ring after the first InfoCell. The LVR and RVR pointers of the InfoCell point to the anchor, as to maintain a closed ring.

The order in which the InfoCells are organized depends on their value. In case of a smaller value, the InfoCell is ordered in on the LVR side, otherwise on the RVR side. This practise is well known in the art as binary tree building. Preferably, the binary trees are organized as balanced or AVL trees, methods which are well known in the art. These kind of trees minimise the number of levels within the tree structure, so as to minimize access time. Preferably, all tree structures within the data system are dynamically balanced in use, so as to guaranty optimum access times.

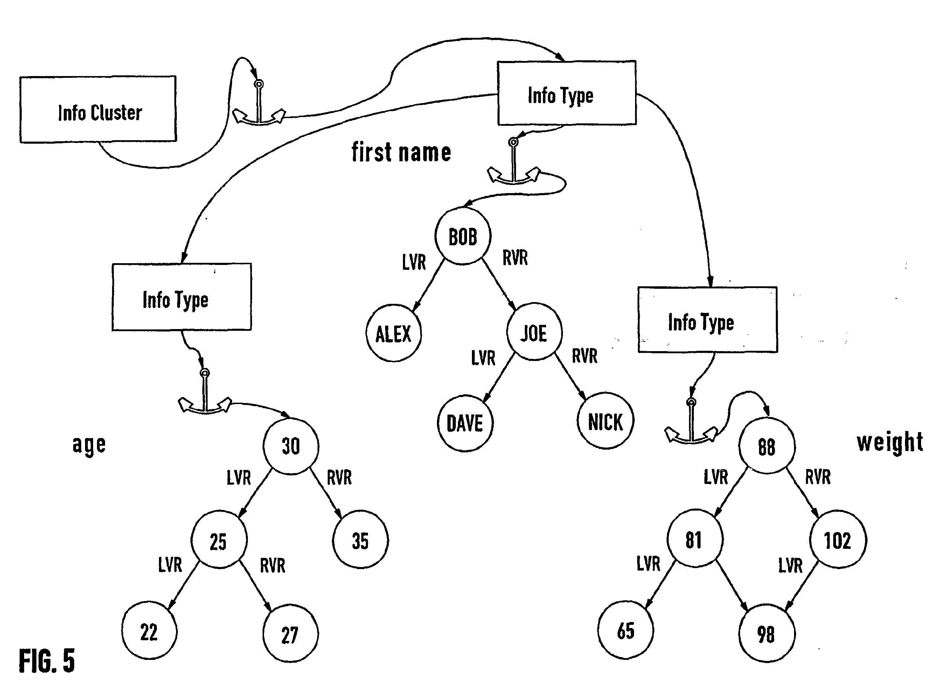

In Fig. 5, the structure is shown that is obtained when all InfoTypes of the table A are put into the data structure. In total three InfoTypes are present; age, first name and weight. Note that the end pointers of each last element in the respective trees are not shown. Under each anchor of the InfoType, the InfoCells are organised in a binary tree. The InfoCluster points to an anchor which in turn points to a first InfoType. The first InfoType in turn points to the other two InfoTypes. Each InfoType points to an anchor. The anchor has the additional function of a marker, that can be used by an access or query process as a break or return sign.

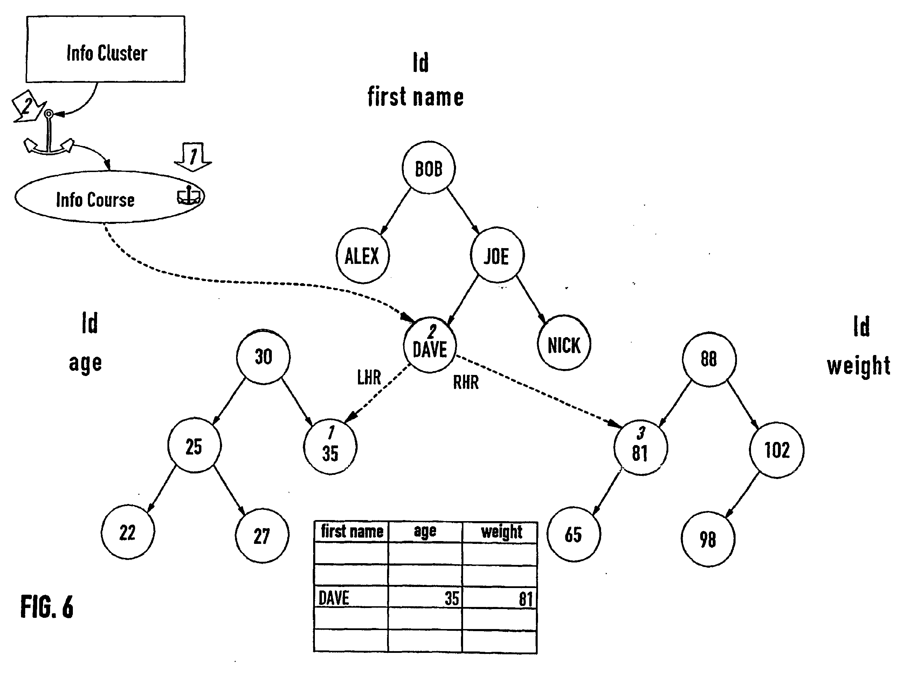

To complete the implementation of the table, the relations between the InfoType have to be made. To this end an InfoCourse is introduced. In Fig. 6, the InfoCourse is shown that contains the data for the fourth line of the table. Use is made of the LHR and RHR pointers. The end pointers again point back to the anchor of the InfoCourse to maintain the ring structure. Note that the InfoCourse also forms a binary tree, sorted by the ID numbers of the InfoTypes. Note that the ID numbers of the InfoTypes are unique, and that integer values are used.

In Fig. 7 all the InfoCourse paths (for example implemented using pointers) are shown for the table A. Note that all InfoCells have been provided in the top section with their respective InfoType Id number, over which the binary tree configuration of the InfoCourse via the LHR/RHR pointers is organized.

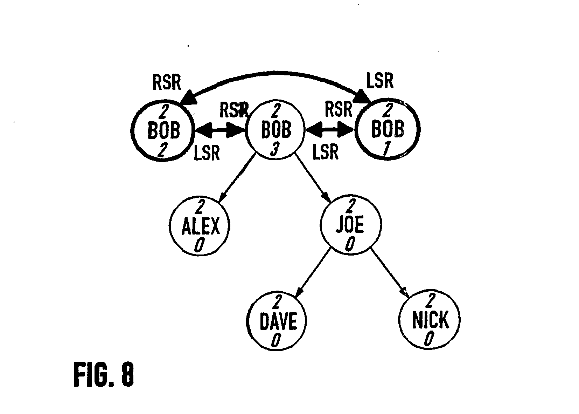

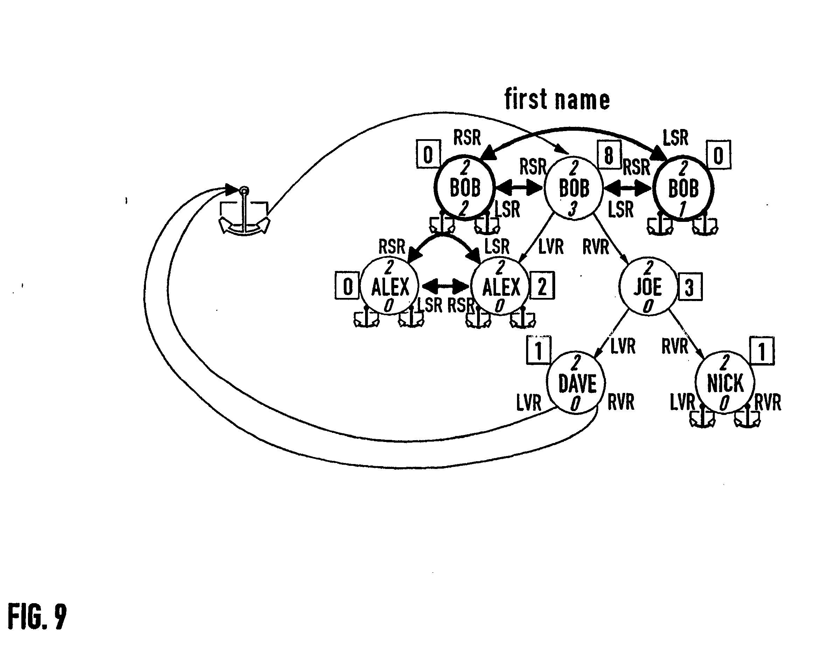

When during the building of a tree for an InfoType the instance of an InfoCell multiple occurrences has, the following mechanism is used to avoid that similar instances occur more than once in the tree structure. In Fig. 9 the case is shown that the first name Bob has three occurrences and the name Alex two occurrences. By means of the LSR/RSR pair of pointers, subsequent multiple entries are added in a ring fashion, which is called a self ring in this context as the ring stays within the element level of the data structure. The element that was added latest, becomes the master element of the ring; the master element is part of the tree structure. As shown in the lower section of each element, the actual total number of elements within a ring is stored in the master element. The other, older elements have a historic value (i.e. lower value) as these values are not updated during insertion of a new element in the ring. This has the practical advantage that the number gives an indication whether the element is older or younger within the ring. This is helpful when navigating through the ring, especially as in practise younger data is accessed more frequently. If an element has a ring value of 0 that is an indication that no self ring is formed around that element, see also Fig. 8. This information can be used to accelerate search queries.

An additional feature is further that a element counter is attributed to each InfoCell. The element counter is indicated in Fig. 9 in the box indicated next to the elements. The element counter is defined as the total of the number of elements that can be reached over the pointers LVR/RVR and LSR/RSR, that is the number of elements in the self ring (if any) plus the number of elements in the tree under the respective element. The number of elements in the self ring is already known in the master element itself, and the elements down in the tree follow simply from the element counter of the elements pointed to by the LVR and RVR pointers. In principle there is no need to actually go through the tree to determine the number of relevant elements. The determination of the element counter as well as the self ring element counter are done initially during the mounting of the data structure, and also when elements are added or deleted. As such the element counter is representative for the potential number of elements that have to be searched in a potential search over this element, or the resources needed for such a search. Although it suffices in principle to use only a single directional pointer self ring, it has additional advantages to use a bidirectional pointer ring.

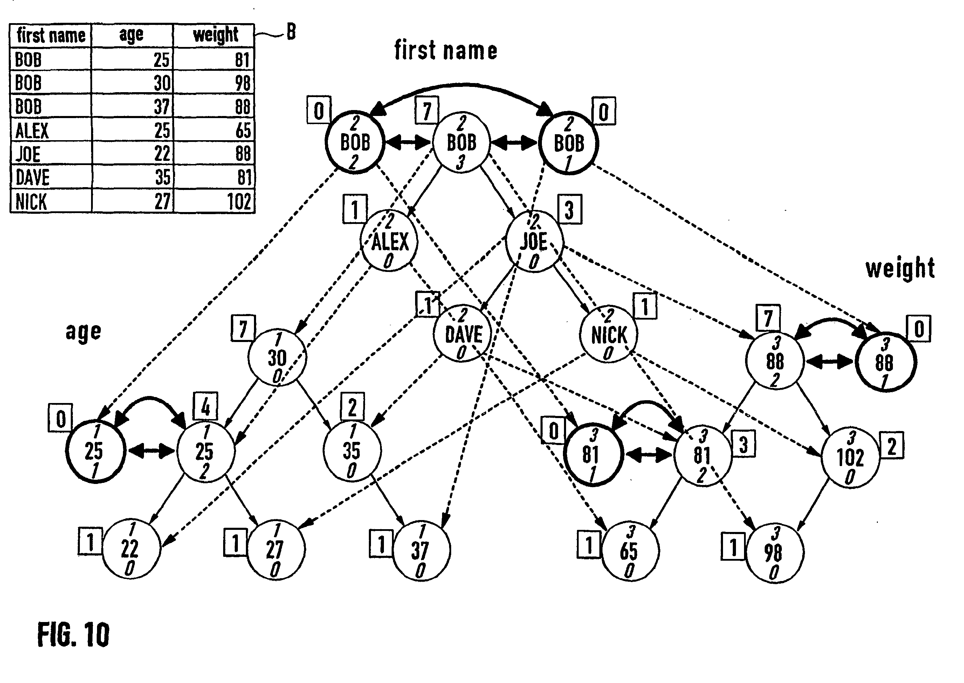

In Fig. 10 a table B is shown as a 6-dimensional structure. All counters and identification numbers are shown for each node. Anchor elements and pointers associated with the anchors (such as for example the pointers that form the closed loop structure) are not shown.

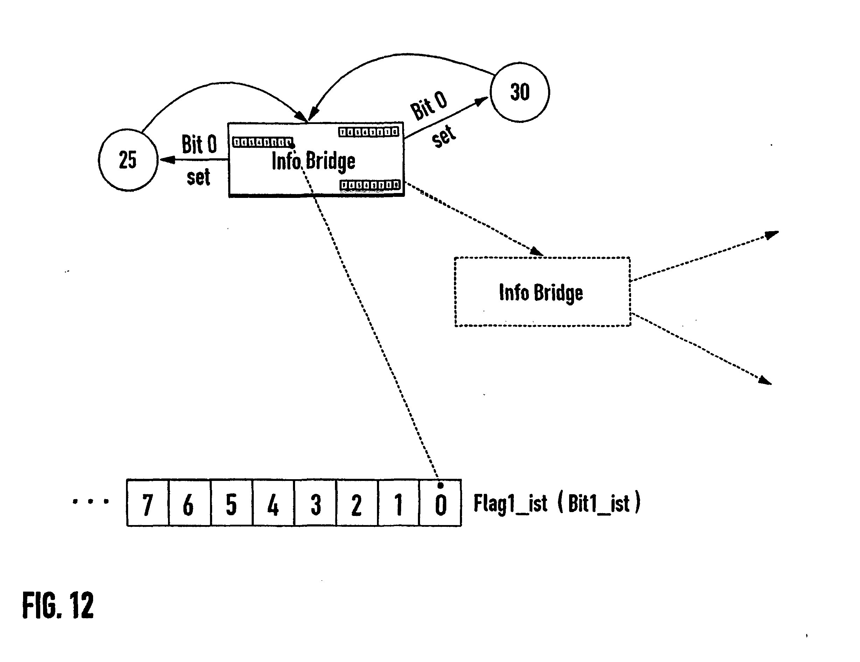

The structure of the InfoType can have the functionality of a previously defined set, so that elements can appear in the InfoType tree that are not included in any InfoCourse. In case an element in an InfoType tree is needed by more than one InfoCourse, it is preferable to make additional InfoType structures for each InfoCourse so that the structure stays definite. The pointer IF of the data element according to the invention can be used for each instance of any object type. The pointer IF can point to any type of instance; the type of the instance that it points to can be determined from the context or an indicator. That can be for example a list of flags (shown in Fig. 12) or for example a condition graph (as known from theory) for each node. The pointer is more efficient as it does not require so many bits, whereas a condition graph has the advantages that it offers to include semantic information to enhance the data structure.

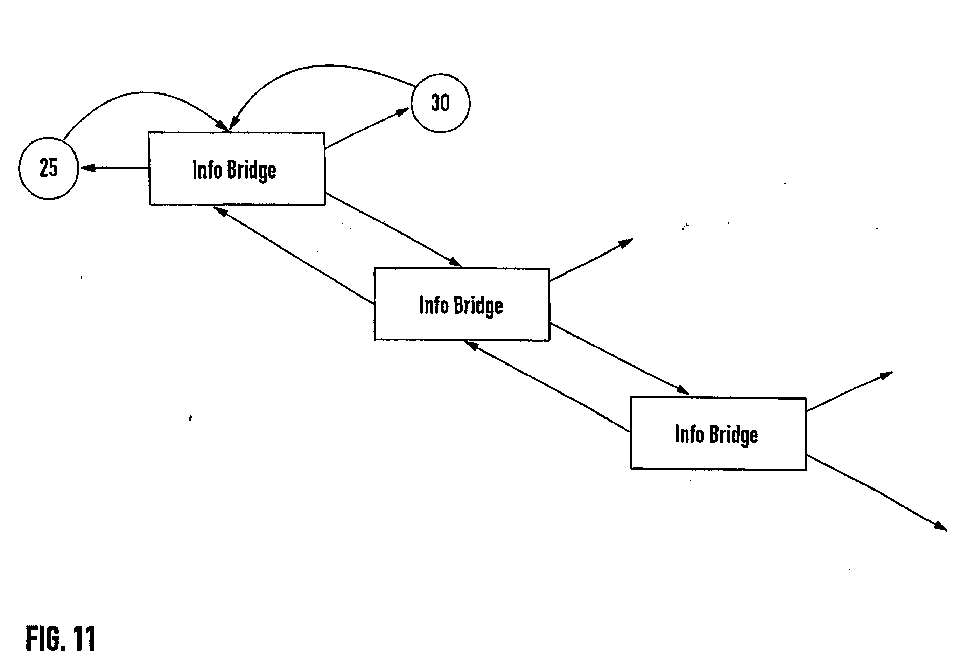

Using the IF pointer connections can be established to any other instances; this can be done for example over an InfoBridge. An InfoBridge according to the invention is a connection element, looking like an Y adapter, that can be cascaded (Fig. 11). Optionally the InfoBridge can bi-directional, so that any network can be represented over the basic structure.

The Pointer IF has a further use. Operations within a data structure change on the whole many data elements at the same time. On micro level however, all the changes take place sequentially. An operation is carried out for instance with a Commit work or a Rollback (these operations are known from the SAP R/3 system) . This means that both the original (unchanged) value and the target (changed) value have to be kept temporarily in the memory until the transaction has been fully completed. An InfoBridge can be used to connect both values together. An example is shown in Fig. 12. The upper InfoBridge connects two InfoCells with each other. By adding an InfoBridge all functionality is kept, and can be augmented by a cascade as is shown by the shaded InfoBridge in Fig. 12.

Although only a connector with an Y configuration is shown, other configurations can be used, for example with more than three connections.

Although in the shown examples the InfoCourse relates to a data record definition that is expressed in a table, the use of an InfoCourse is not limited to this. An InfoCourse can for example extend over unlimited InfoTypes of various InfoClusters or even InfoAreas. In this way it is also possible to ensure referential integrity. It is for example not necessary to copy values of a test table into the application table (as is usual for known databases). Instead, the respective InfoCell will be given as value a pointer to the InfoCell of the InfoCluster that is used as the test table.

Query optimisers are used to determine the query route that has the shortest estimated runtime.

The implementation of the system as described above can be made using any known and suitable method and programming language. It is helpful if the language of the implementation supports pointers. It is also useful if the programming language is object orientated, but this is not essential. For most implementations addition control structures would be necessary, comprising temporary elements. However, such implementation details as such are known and are within reach of the person skilled in the art. An experimental implementation of the invention was programmed in C++, which language has the additional benefits of availability of pointers, objects, and object classes.

The invention can be implemented in particularly in a random access memory (RAM), wherein the addresses can be randomly accessed. The use of a random access memory also has the advantage that changes to the data structure do not effect efficiency in any way. Although the invention is preferably implemented in a random access memory, the implementation is not limited to this form, and other implementations in memory devices are possible.

### Examples

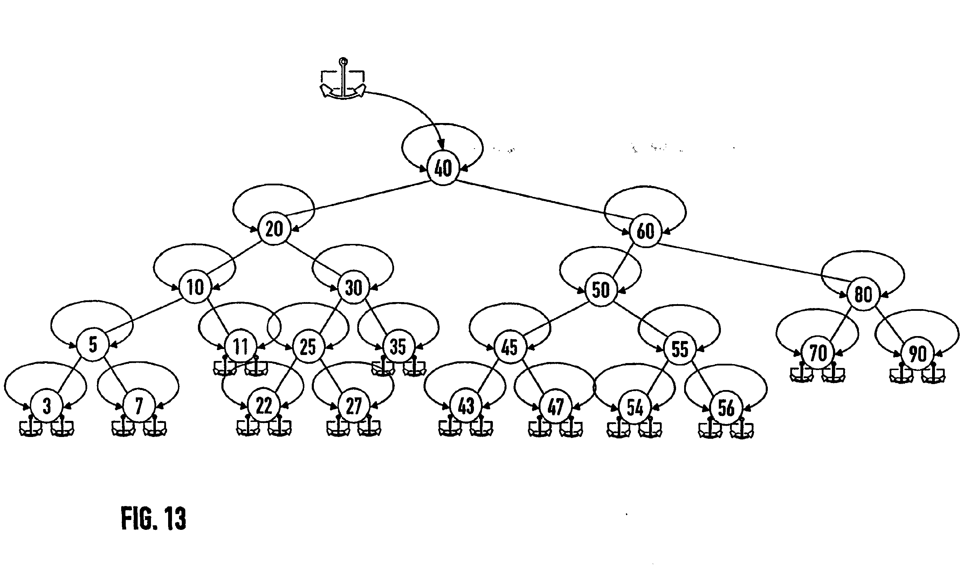

In the following examples is shown how the access to InfoCells take place. For the examples only InfoCells that belong to one InfoType are used. Such a structure, which is a part of a larger data set is shown in Fig. 13.

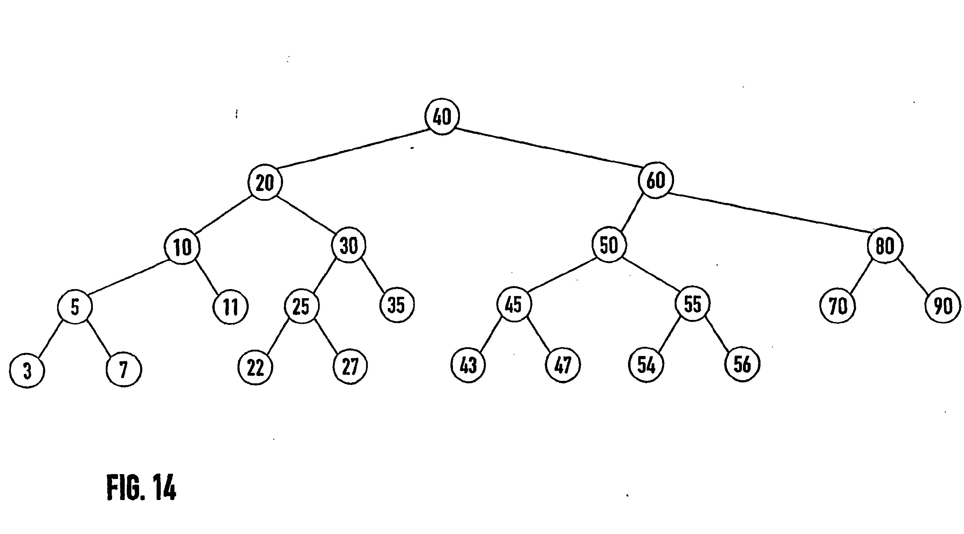

To access a data element in the structure, the ring pointer structure is used, including the pointers that lead back to a ring (LVR/RVR) and self rings. Im fig. 13 the pointers are represented by small anchor symbols. In Fig. 14 the structure of Fig. 13 is shown, with the relations of the binary tree structure, that underlies the structure of Fig 13, in case that no multiple identical elements are assumed. In the following, a number of examples of search queries are shown.

### Example 1: Query (key = 54)

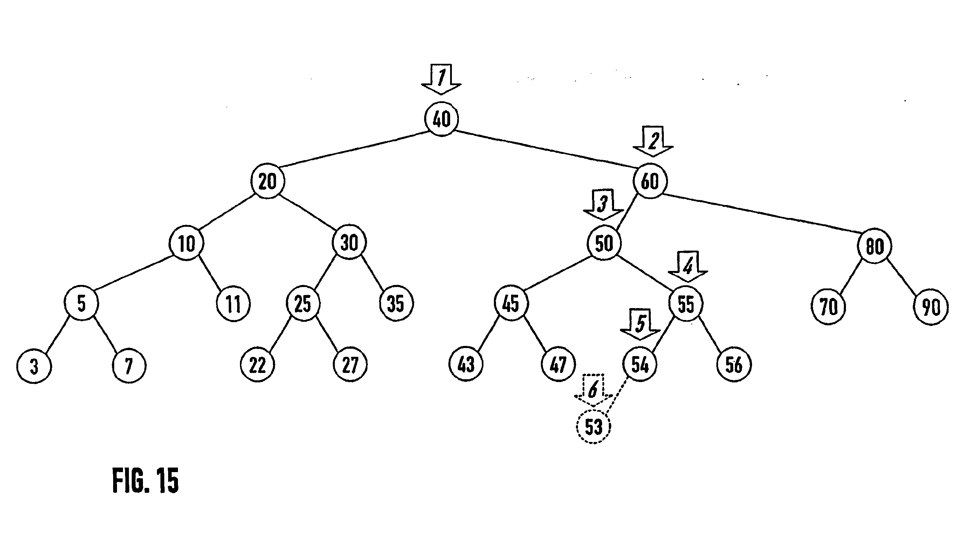

Goal is to find a data element with key 54. The search starts at the position 1 (arrow with 1 in fig. 15), which is just after the anchor shown in Fig. 13. After that the search is similar to a search in a binary tree, and the InfoCells are visited in turn, i.e. the tree is descended, wherein the consecutive InfoCells are indicated by the arrows 1 to 5. With 5 the respective element is found.

This InfoCell is, as other InfoCells, provided with a pointer pair LHR and RHR. From the InfoCell neighbouring semantic information can be acquired of the InfoCourse. As the InfoCourse pointers also are organised as a ring tree, can always the starting anchor of the InfoCourse be reached. From this starting anchor every element in the InfoCourse structure can be reached. To further enhance the performance, an additional pointer can be added to each InfoCell that points directly to this InfoCourse anchor. Using this pointer it is not necessary to go fully down through the InfoCourse tree to reach this anchor.

To insert a value (for example 53 as shown in the Fig. 15 at 6), the same method as described above is used to reach point 6 where the new InfoCell is added. After addition of the InfoCell the binary tree can, if required, be resorted to balance it out. Such re-sort methods are well known in the art.

### Example 2: Query (key < 20)

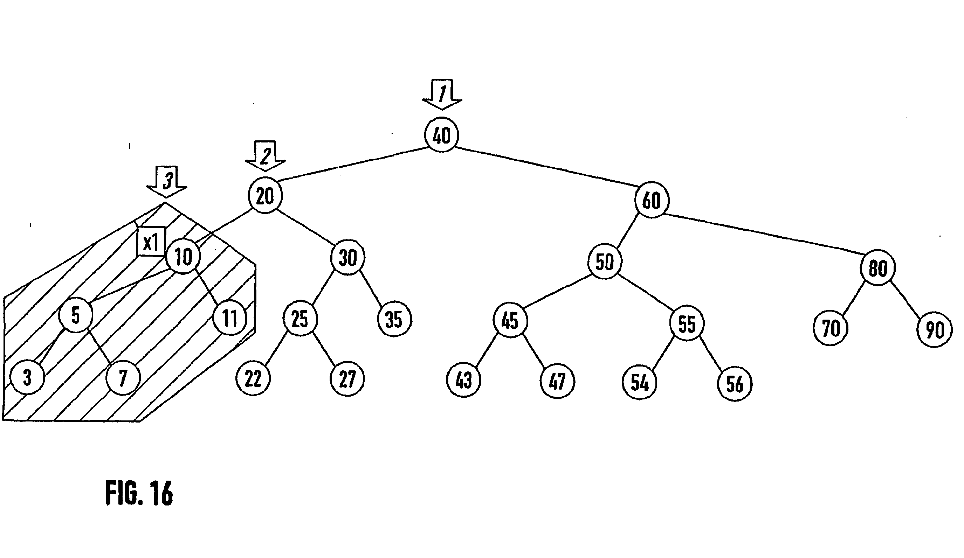

In this example the query is to find the shaded subset of the tree (fig. 16), that fulfils the condition key < 20. Again, the search is started at position 1, and the tree is followed down (using known techniques as before) to end at position 3. Here it is noted that due to the structure of the tree all elements down this end of the tree fulfil the condition. The number of element in this section of the tree is known (without the need to search through the lower section of the tree), as the InfoCell 10 is provided with an element counter (X1) indication, that exactly tells how many elements follow in this section of the tree.

### Example 3: Query (key < 28)

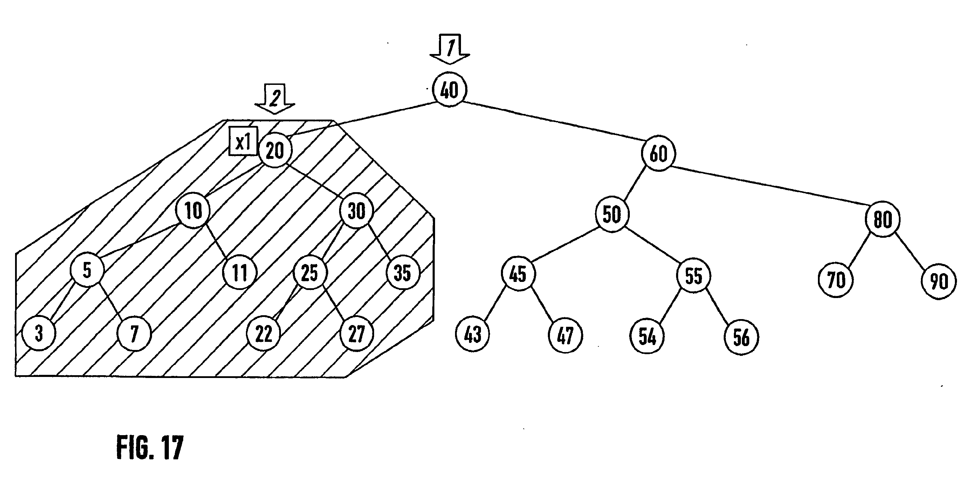

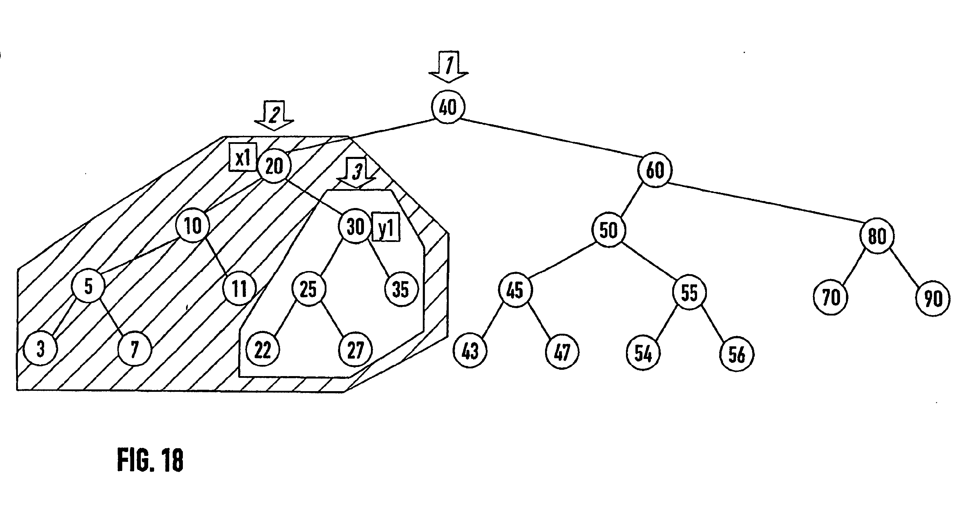

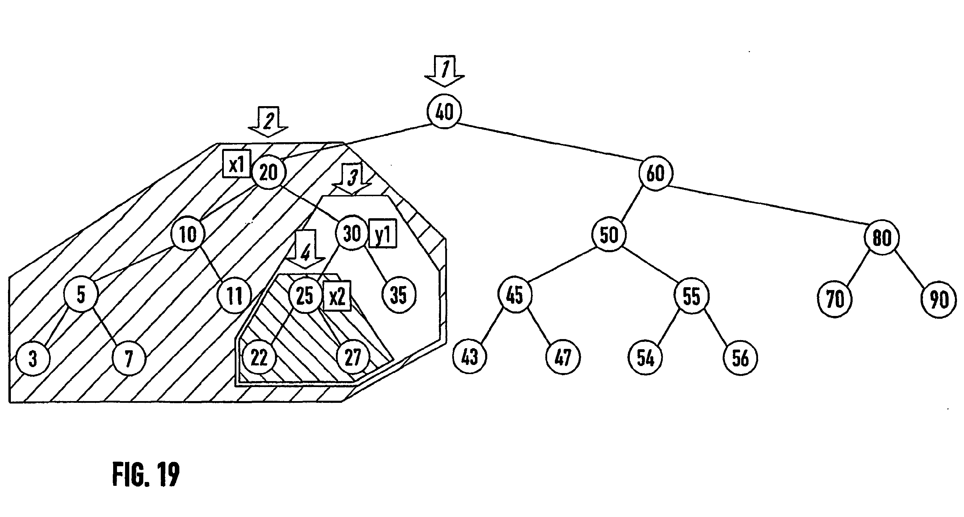

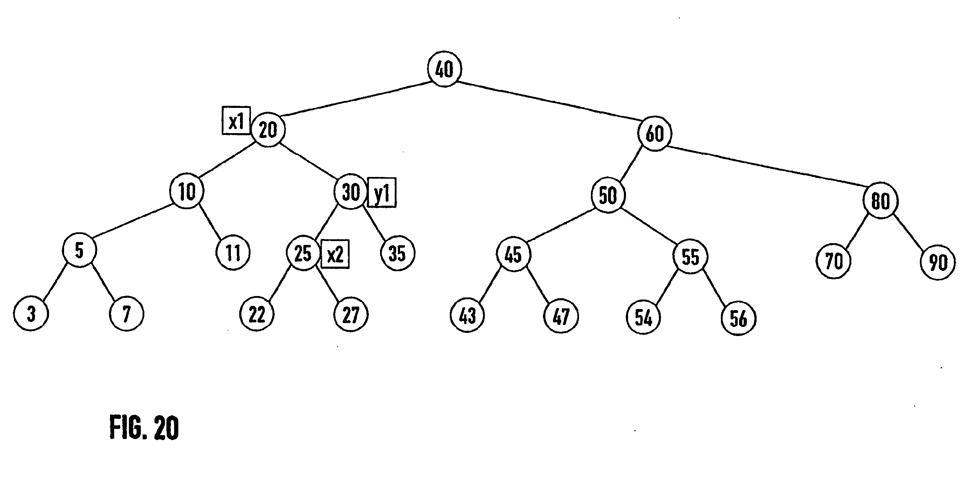

In this example (Fig. 17) is shown how a number of hits can be determined for a search in the database structure.
The search in the tree is started with position 1, and leads to position 2, where the query criterion is fulfilled. The element counter x1 can however not be used directly, as also cells are included that do not meet the criterion (i.e. 30 and 35). The path is followed from position 2 to position 3 (Fig. 18), where the element counter y1 is found. From this position the path leads further to position 4, where the element counter x2 is found (Fig. 19). Now the search is completed, and the exact number of hits for the query key (<28) can be calculated by respective addition and subtraction of the found element counters x1, y1, and x2 (Fig. 20), to yield the number of cells within the shaded area that represents the target group of cells. Note that with a relatively small number of steps one path down in the tree structure, the number of hits the query yields is determined deterministically, yielding an exact number of cells.

On basis of the information of the number of hits for a given query, the search optimiser can make a search plan, based on actual facts.

### Example 4: Query (key > 10)

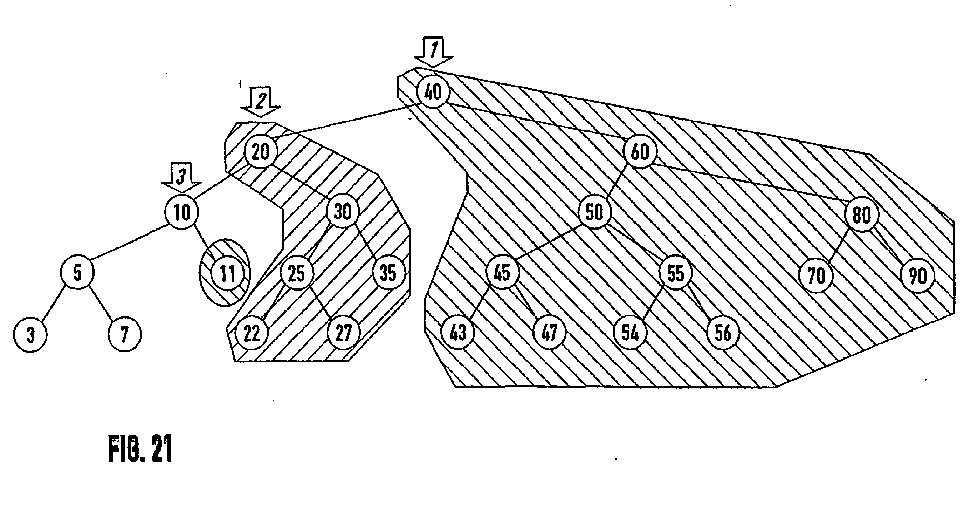

In Fig. 21 the same logical analysis as was made for example 3 is shown for a further example, with a query key>10. The search is started with position 1, which immediately yields the first results in the form of the shaded area. The search goes then to position 2, where the second shaded area is determined. The search then finalises with position 3. All the cells in the right path have to be taken into account (except for the cell 10 in position 3 itself). If the query key had been >= then also this cell had to be taken into account.

The number of hits is calculated in the same way as in the previous examples, i.e. by adding and subtracting element counters depending on whether they should be taken into account or not.

### Example 5: Query (key between 24 and 54)

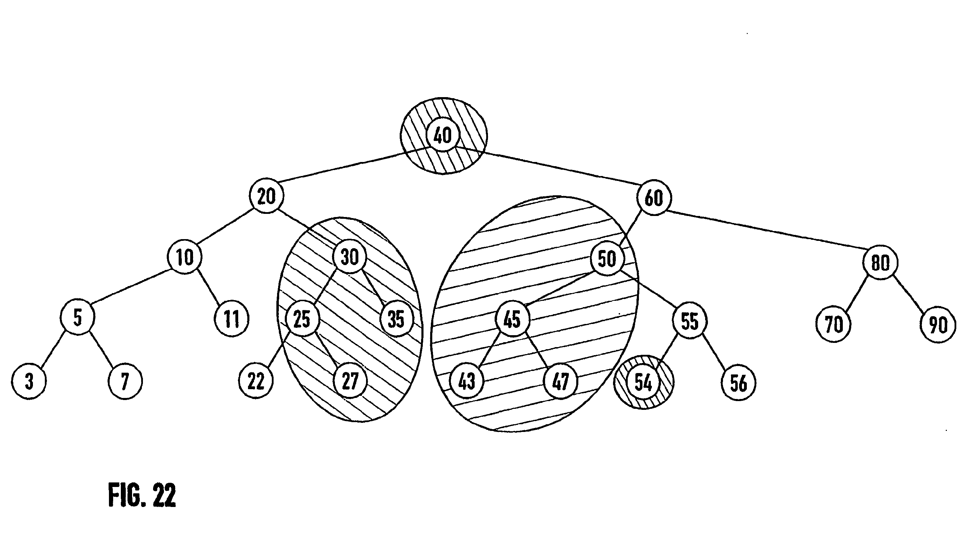

In fig. 22 is a query shown that needs two searches trough the tree structure to determine the number of hits. The tree is entered at 40, so both left and right branches have to be searched, more specific, the left branch with the lower value of 24 and the right branch with the upper value of 54. As a result the circled set of cells meeting the criteria of the query are identified.

Alternatively, the query could be split into two elementarily queries (key >= 24 and key <= 54), however, the result would be the same.

### Example 6: Optimising the access path

In this example a more complex search is shown, as well as an optimising method that uses the just described methods of determining the numbers of hits for a specific query.

The example has the compound query criterion:
key_1 < 28 and key_2 >= value_2 and key_3 < value_3

To execute such a complex statement, the optimiser according to the invention determines how many hits are obtained in each section of the query. Based on the number of hits, the optimiser will process query sections with the lowest number of hits first and those with higher numbers of hits later.

To determine the number of hits for each section of the query the tree has to be searched once for each section, as shown in the example above.

As alternative is it possible to store the start addresses of nodes in the tree that already have been found. Based on the information that these starting addresses contain (such as element counter), parts of the tree need not be searched for a sub section of the query, as it can be deduced from information already stored.

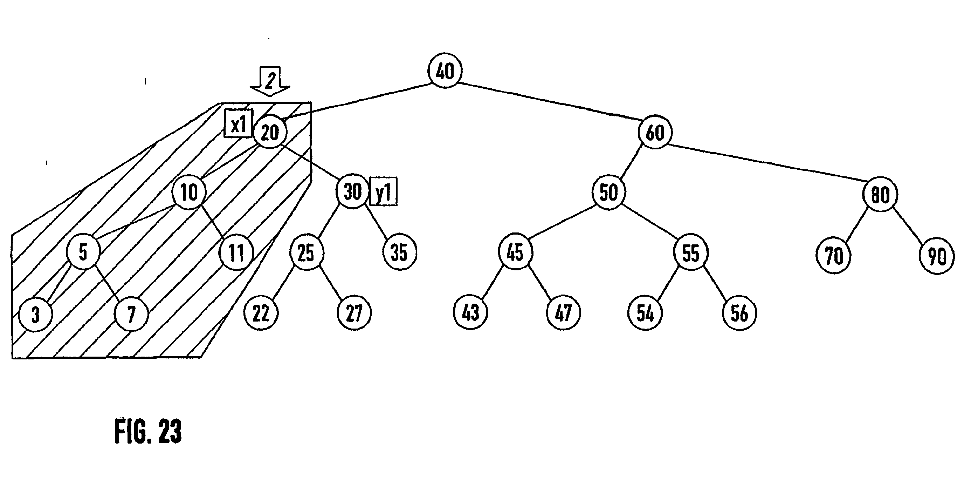

The first section of the query matches the example shown in Fig. 17. When the position 2 is reached in that example, a temporary instance of an object of the type Guide is made that stores the address of the position 2. Furthermore is an iteration value It made (which is similar to Fig. 23), that stores the number of actual valid cells in a sub tree. This value It can be later used as the end criterion for an algorithm for traversing of the sub tree. This saves the comparison of the search criterion to the cell values, as the end criterion is reached after visiting all the valid cells in the tree section. As It is of the integer type, the comparison is faster than comparing the actual value of a cell, which cell could be a long character chain.

From Fig. 19, position 4 (25) is clear, that a further sub tree exists that must be traversed, if the criterion (key_1 < 28) is used later by the optimiser as the first one.
To this end a further Guide is introduced that stores the start address of the cell 25, and the iteration value It, that is similar to x2 in this case.

With very extensive tree structures several sub trees that contain valid hits can be identified during one traversion. For every top element of such a sub tree a Guide is made that contains the start address and the It value of the element. All Guides form a linked linear list, that is added to the respective criterion.

After all parts of the AND chain have been searched for their number of hits (M), and the optimiser has chosen the part of the selection criterion that has the smallest number of hits, the optimiser can use the linear list of Guides to access directly the trees with valid cells. Note that the linear lists for the other parts of the criterion are discarded, but this does not lead to increased processing time.

The optimiser according to the invention determines the search path based on the exact determination of the number of hits that are obtained with the respective parts of a search criterion. In this way the determination of the search path yields always the most optimal choice.

## Claims

1. A computer system for providing a database index tree structure for storage of and access to data, the database index tree structure
with at least one data element of a first type (InfoCluster) associated with:
- data elements (InfoCells) of a second type (InfoTypes), representing database attribute entries, and
- data elements of a third type (InfoCourse), representing data records being associated with said data elements of the second type (InfoType),
wherein the data elements (InfoCells) of the second type (InfoType) are arranged in a plurality of balanced attribute tree structures, each attribute tree structure includes the data elements of the second type (InfoType) of one database attribute in sorted order and each attribute tree structure includes a set of pointers (LVR, RVR, LSR, RSR, IF) which link the data elements (InfoCells) of the second type (InfoType);
the data elements of the third type (InfoCourse) are arranged in a further balanced tree structure; and
for each data element of the third type (InfoCourse), the data elements (InfoCells) of the second type (InfoType) belonging to the data record represented by the associated data element of the third type (InfoCourse) are arranged in the further balanced tree structure sorted by an identification number (ID) of the data elements of the second type (InfoType),
wherein all data elements (InfoCelle) of the second type (InfoType) in one attribute tree structure have the same identification number (ID) and wherein the further balanced tree structure includes a further set of pointers (LHR, RHR) which link the data elements (InfoCells) of the second type (infoType) belonging to the data record represented by the associated data element of the third type (InfoCourse).

2. Computer system according to claim 1, wherein end sections of the tree structures are connected via linking elements to a start section of at least the respective tree structure.

3. Computer system according to claim 1 or 2, wherein multiple occurrences of similar data elements of the second type (InfoType) are arranged in a self-ring comprising a set of data elements that are mutually connected through linking elements, and wherein one data element of the set is directly part of the respective tree structure.

4. Computer system according to any of the preceding claims, wherein data elements of a tree are provided with a number representative of the number of data elements arranged in the tree structure under said respective data element.

5. Computer system according to any of the preceding claims, wherein node between the data elements of the first and second type are formed by elements of a third type (infoCell).

6. Computer system according to any of the preceding claims, a data element for a database structure comprising
a first pointer pair (LSR, RSR),
a second pointer pair (LHR, RHR), and
a third pointer pair (LVR, RVR).

7. Computer system according to claim 4, a data element further comprising an IF pointer (IF).

8. Method for optimising a database query, comprising the steps of
decomposing a search criterion in sections, wherein a section represents a set of data elements (InfoCells) of data type (InfoTypes), the data elements (InfoCells) being connected through pointers in a balanced attribute tree structure in which the data elements (InfoCells) of the data type (InfoTypes) are being arranged, wherein data elements of a further data type (InfoCourse) represent data records being associated with data elements of the data type (InfoType) and the data elements of the further data type (InfoCourse) are arranged in a further balanced tree structure, and wherein for each data element of the further data type (Infocourse), the data elements (InfoCells) of the data type (InfoType) belonging to the data record represented by the associated data element of the further data type (InfoCourse) are arranged in the further balanced tree structure sorted by an identification number (ID) of the data elements of the data type (InfoType), wherein all data elements (InfoCells) of the data type (InfoType) in one attribute tree structure have the same identification number (ID) and wherein the further balanced tree structure includes a further set of pointers (LHR, RHR) which link the data elements (InfoCells) of the data type (InfoType) belonging to the data record represented by the associated data element of the further data type (InfoCourse),
determining for each section a number of hits on the actual database structure,
selecting a database query path according to the determined number of hits for each section.

9. Computer program product comprising program instructions that are loadable into a memory of a computer system and when loaded configure the computer system to:
create at least one data element of a first type (InfoCluster);
create data elements (InfoCells) of a second type (InfoTypes), representing database attribute entries, wherein the data elements (InfoCells) of the second type (InfoType) are arranged in a plurality of balanced attribute tree structures, each attribute tree structure includes the data elements of the second type (InfoType) of one database attribute in sorted order and each attribute tree structure includes a set of pointers (LVR, RVR, LSR, RSR, IF) which link the data elements (InfoCells) of the second type (InfoType);
create data elements of a third type (InfoCourse) wherein the data elements of the third type (InfoCourse) are arranged in a further tree structure; and for each data element of the third type (InfoCourae), the data elements (InfoCells) of the second type (InfoType) belonging to the data record represented by the associated data element of the third type (InfoCourse) are arranged in a still further balanced tree structure sorted by an identification number (ID) of the data elements of the second type (InfoType), wherein all data elements (InfoCells) of the second type (InfoType) in one attribute tree structure have the same identification number (ID) and wherein the still further balanced tree structure includes a further set of pointers (LHR, RHR) which link the data elements (InfoCells) of the second type (InfoType) belonging to the data record represented by the associated data element of the third type (InfoCourse); and
connect a data element of the first type (InfoCluster) to a data element of the second type (InfoType) and to a data element of the third type (InfoCourse) through an anchor.

## Patentansprüche

1. Computersystem zur Bereitstellung einer Datenbank-Indexbaumstruktur zur Speicherung von Daten und zum Zugriff auf Daten, wobei die Datenbank-Indexbaumstruktur mindestens ein Datenelement eines ersten Typs (InfoCluster) aufweist, assoziiert mit:
- Datenelementen (InfoCells) eines zweiten Typs (InfoTypes) zur Repräsentation von Datenbanlr-Attributeinträgen, und
- Datenelementen eines dritten Typs (InfoCourse) zur Repräsentation von Datensätzen, die mit den Datenelementen des zweiten Typs (InfoType) assoziiert sind, wobei die Datenelemente (InfoCells) des zweiten Typs (InfoType) in einer Vielzahl ausgeglichener Attribut= Baumstrukturen angeordnet sind, wobei jede Attribut-Baumstruktur die Datenelemente des zweiten Typs (InfoType) eines Datenbank-Attributs in sortierter Reihenfolge enthält und jede Attribut-Baumstruktur eine Menge von Zeigern (LVR, RVR, LSR, RSR, IF) enthält, die die Datenelemente (InfoCells) des zweiten Typs (InfoType) verknüpfen;
die Datenelemente des dritten Typs (InfoCourse) im einer weiteren ausgeglichenen Baumstruktur angeordnet sind; und für jedes Datenelement des dritten Typs (InfoCourse) die Datenelemente (InfoCells) des zweitem Typs (InfoType), die zu dem Datensatz gehören, der durch das assoziierte Datenelement des dritten Typs (InfoCourse) repräsentiert wird, in der weiterem ausgeglichenen Baumstruktur nach einer Identifikationsnummer (ID) der Datenelemente des zweiten Typs (InfoType) sortiert sind, wobei alle Datenelemente (InfoCells) des zweiten Typs (InfoType) in einer Attribut-Baumstruktur dieselbe Identifikationsnummer (ID) aufweisen und wobei die weitere ausgeglichene Baumstruktur eine weitere Menge von Zeigern (LHR, RHR) enthält, die die Datenelemente (InfoCells) des zweitem Typs (InfoType), die zu dem Datensatz gehören, der durch das assoziierte Datenelement des dritten Typs (InfoCourse) repräsentiert wird, verknüpfen.

2. Computersystem nach Anspruch 1, wobei Endteile der Baumstrukturen über Verknüpfungselemente mit einem Startteil mindestens der jeweiligen Baumstruktur verbunden sind.

3. Computersystem nach Anspruch 1 oder 2, wobei mehrfach auftretende ähnliche Datenelemente des zweiten Typs (InfoType) in einem Selbstring angeordnet sind, der eine Menge von Datenelementen umfaßt, die untereinander durch Verknüpfungselemente verbunden sind, und wobei ein Datenelement der Menge direkt Teil der jeweiligen Baumstruktur ist.

4. Computersystem nach einem der vorhergehenden Ansprüche, wobei Datenelemente eines Baums mit einer Zahl ausgestattet werden, die die Anzahl der in der Baumstruktur unter dem jeweiligen Datenelement angeordneten Datenelemente repräsentiert.

5. Computersystem nach einem der vorhergehenden Ansprüche, wobei ein Knoten zwischen den Datenelementen des ersten und des zweiten Typs durch Elemente eines dritten Typs (InfoCell) gebildet wird.

6. Computersystem nach einem der vorhergehenden Ansprüche, wobei ein Datenelement für eine Datenbankstruktur folgendes umfaßt:
ein erstes Zeigerpaar (LSR, RSR),
ein zweites Zeigerpaar (LHR, RHR) und
ein drittes Zeigerpaar (LVR, RVR).

7. Computersystem nach Anspruch 4, wobei ein Datenelement ferner einen IF-Zeiger (IF) umfaßt.

8. Verfahren zum Optimieren einer Datenbankanfrage, mit den folgenden Schritten:
Zerlegen eines Suchkriteriums in Teile, wobei ein Teil eine Menge von Datenelementen (InfoCells) des Datentyps (InfoTypes) repräsentiert, wobei die Datenelemente (InfoCells) durch Zeiger in einer ausgeglichenen Attribut-Baumstruktur verbunden sind, in der die Datenelemente (InfoCells) des Datentyps (InfoTypes) angeordnet sind, wobei Datenelemente eines weiteren Datentyps (InfoCourse) Datensätze repräsentieren, die mit Datenelementen des Datentyps (InfoType) assoziiert sind, und die Datenelemente des weiteren Datentyps (InfoCourse) in einer weiteren ausgeglichenen Baumstruktur angeordnet werden und wobei für jedes Datenelement des weiteren Datentyps (InfoCourse) die Datenelemente (InfoCells) des Datentyps (InfoType), die zu dem Datensatz gehören, der durch das assoziierte Datenelement des weiteren Datentyps (InfoCousse) repräsentiert wird, in einer weiteren ausgeglichenen Baumstruktur angeordnet werden, die nach einer Identifikationsnummer (ID) der Datenelemente des Datentyps (InfoType) sortiert wird, wobei alle Datenelemente (InfoCells) des Datentyps (InfoType) in einer Attribut - Baumstruktur dieselbe Identifikationsnummer (ID) aufweisen und wobei die weitere ausgeglichene Baumstruktur eine weitere Menge von Zeigern (LHR, RHR) enthält, die die Datenelemente (InfoCells) des Datentyps (InfoType), die zu dem Datensatz gehören, der durch das assoziierte Datenelement des weiteren Datentyps (InfoCourse) repräsentiert wird, verknüpfen,
Bestimmen einer Anzahl von Treffern an der tatsächlichen Datenbankstruktur für jeden Teil,
Auswählen eines Datenbank-Anfrageweges abhängig von der bestimmten Anzahl von Treffern für jeden Teil.

9. Computerprogrammprodukt mit Programmanweisungen, die in einen Speicher eines Computersystems ladbar sind und, wenn sie geladen sind, das Computersystem für folgendes konfigurieren:
Erzeugen mindestens eines Datenelements eines ersten Typs (infoCluster);
Erzeugen von Datenelementen (InfoCells) eines zweiten Typs (InfoTypes) zum Repräsentieren von Datenbank-Attributeinträgen, wobei die Datenelemente (InfoCells) des zweiten Typs (InfoType) in einer Vielzahl ausgeglichener Attribut-Baumstrukturen angeordnet werden, wobei jede Attribut-Baumstruktur die Datenelemente des zweiten Typs (InfoType) eines Datenbank-Attributs in sortierter Reihenfolge enthält und jede Attribut-Baumstruktur eine Menge von Zeigern (LVR, RVR, LSR, RSR, IF) enthält, die die Datenelemente (InfoCells) des zweiten Typs (InfoType) verknüpfen;
Erzeugen von Datenelementen eines dritten Typs (InfoCourse), wobei die Datenelemente des dritten Typs (InfoCourse) in einer weiteren Baumstruktur angeordnet werden; und für jedes Datenelement des dritten Typs (InfoCourse) werden die Datenelemente (InfoCells) des zweiten Typs (InfoType), die zu dem Datensatz gehören, der durch das assoziierte Datenelement des dritten Typs (InfoCourse) repräsentiert wird, in noch einer weiteren ausgeglichenen Baumstruktur angeordnet, die nach einer Identifikationsnummer (ID) der Datenelemente des zweiten Typs (InfoType) sortiert wird, wobei alle Datenelemente (InfoCells) des zweiten Typs (InfoType) in einer Attribut-Baumstruktur dieselbe Identifikationsnummer (ID) aufweisen und wobei die noch weitere ausgeglichene Baumstruktur eine weitere Menge von Zeigern (LHR, RHR) enthält, die die Datenelemente (InfoCells) des zweiten Typs (InfoType), die zu dem Datensatz gehören, der durch das assoziierte Datenelement des dritten Typs (InfoCourse) repräsentiert wird, verknüpfen; und
Verbinden eines Datenelements des ersten Typs (InfoCluster) mit einem Datenelement des zweiten Typs (InfoType) und einem Datenelement des dritten Typs (InfoCourse) durch einen Anker.

## Revendications

1. Système informatique pour fournir une structure arborescente d'index de base de données permettant de stocker et d'accéder à des données, la structure arborescente d'index de base de données comportant au moins un élément de données d'un premier type (InfoCluster) associé à :
- des éléments de données (InfoCells) d'un deuxième type (InfoTypes) représentant des entrées d'attributs de base de données, et
- des éléments de données d'un troisième type (InfoCourse) représentant des enregistrements de données associés auxdits éléments de données du deuxième type (InfoType),
où les éléments de données (InfoCells) du deuxième un type (InfoType) sont disposés dans une pluralité de structures arborescentes d'attributs équilibrées, chaque structure arborescente d'attributs équilibrée comporte les éléments de données du deuxième type (InfoType) d'un attribut de base de données en ordre trié et chaque structure arborescente d'attributs comporte un ensemble de pointeurs (LVR, RVR, LSR, RSR, IF) qui relient les éléments de données (InfoCells) du deuxième type (InfoType) ;
les éléments de données du troisième type (InfoCourse) sont disposés dans une structure arborescente équilibrée supplémentaire ; et, pour chaque élément de données du troisième type (InfoCourse), les éléments de données (InfoCells) du deuxième type (InfoType) appartenant à l'enregistrement de données représenté par l'élément, de données associé du troisième type (InfoCourse) sont disposés dans la structure arborescente équilibrée supplémentaire triée en fonction d'un numéro d'identification (ID) des éléments de données du deuxième type (InfoType),
où tous les éléments de données (InfoCells) du deuxième type (InfoType) dans une structure arborescente d'attributs possèdent le même numéro d'identification (ID), et où la structure arborescente équilibrée supplémentaire comporte un ensemble supplémentaire de pointeurs (LHR, RHR) qui relient les éléments de données (InfoCells) du deuxième type (InfoType) appartenant à l'enregistrement de données représenté par l'élément de données associé du troisième type (InfoCourse) .

2. Système informatique selon la revendication 1, dans lequel des sections d'extrémité des structures arborescentes sont reliées par le biais d'éléments de liaison à une section de départ d'au moins la structure arborescente respective.

3. Système informatique selon la revendication 1 ou 2, dans lequel des occurrences multiples d'éléments de données similaires du deuxième type (InfoType) sont disposées dans un anneau propre comprenant un ensemble d'éléments de données qui sont mutuellement reliés par l'intermédiaire d'éléments de liaisons, et dans lequel un élément de données de l'ensemble fait directement partie de la structure arborescente respective.

4. Système informatique selon l'une quelconque des revendications précédentes, dans lequel des éléments de données d'une arborescence sont dotés d'un numéro représentant le nombre d'éléments de données disposés dans la structure arborescente sous ledit élément de données respectif.

5. Système informatique selon l'une quelconque des revendications précédentes, dans lequel les noeuds entre les éléments de données des premier et deuxième types sont formés par des éléments d'un troisième type (InfoCell).

6. Système informatique selon l'une quelconque des revendications précédentes, un élément de données pour une structure de base de données comprenant:
une première paire de pointeurs (LSR, RSR),
une deuxième paire de pointeurs (LHR, RHR), et
une troisième paire de pointeurs (LVR, RVR).

7. Système informatique selon la revendication 4, un élément de données comprenant en outre un pointeur IF (IF).

8. Procédé d'optimisation d'une interrogation de base de données, comprenant les étapes consistant à :
décomposer un critère de recherche en sections, où chaque section représente un ensemble d'éléments de données (InfoCells) de type de données (InfoTypes), les éléments de données (InfoCells) étant reliés par des pointeurs dans une structure arborescente d'attributs équilibré dans laquelle les, éléments de données (InfoCells) du type de données (infotypes) sont disposés, où des éléments de données d'un type de données supplémentaire (InfoCourse) représentent des enregistrements de données associés à des éléments de données du type de données (InfoType) et les éléments de données du type de données supplémentaire (InfoCourse) sont disposés dans une structure arborescente équilibrée supplémentaire, et. où, pour chaque élément de données du type de données supplémentaire (InfoCourse), les éléments de données (InfoCells) du type de données (InfoType) appartenant à l'enregistrement de données représenté par l'élément de données associé du type de données supplémentaire (InfoCourse) sont disposés dans la structure arborescente équilibrée supplémentaire triée en fonction d'un numéro d'identification (ID) des éléments de données du type de données (InfoType), où tous les éléments de données (InfoCells) du type de données (InfoType) dans une structure arborescente d'attributs possèdent le même numéro d'identification (ID), et où la structure arborescente équilibrée supplémentaire comporte un ensemble supplémentaire de pointeurs (LHR, RHR) qui relient les éléments de données (InfoCells) du type de données (InfoType) appartenant à l'enregistrement de données représenté par l'élément de données associé du type de données supplémentaire (InfoCourse),
déterminer, pour chaque section, un nombre de contentions sur la structure de base de données effective,
sélectionner un chemin d'interrogation de base de données selon le nombre de contentions déterminé pour chaque section.

9. Produit programme informatique comprenant des instructions de programme susceptibles d'être chargées dans une mémoire d'un système informatique et, une fois chargées, configurant le système informatique pour :
créer au moins un élément de données d'un premier type (InfoCluster) ;
créer des éléments de données (InfoCells) d'un deuxième type (InfoTypes) représentant des entrées d'attributs de base de données, où les éléments de données (InfoCells) du deuxième type (InfoType) sont disposés dans une pluralité de structures arborescentes d'attributs. équilibrées, chaque structure arborescente d'attributs équilibrée comporte les éléments de données du deuxième type (InfoType) d'un attribut de base de données en ordre trié et chaque structure arborescente d'attributs comporte un ensemble de pointeurs (LVR, RVR, LSR, RSR, IF) qui relient les éléments de données (InfoCells) du deuxième type (InfoType) ;
créer des éléments de données d'un troisième type (InfoCourse) où les éléments de données du troisième type (InfoCourse) sont disposés dans une structure arborescente équilibrée supplémentaire ;
et, pour chaque élément de données du troisième type (InfoCourse), les éléments de données (InfoCells) du deuxième type (InfoType) appartenant à l'enregistrement de données représenté par l'élément de données associé du troisième type (InfoCourse) sont disposés dans une autre structure arborescente équilibrée supplémentaire triée en fonction d'un numéro d'identification (ID) des éléments de données du deuxième type (InfoType), où tous les éléments de données (InfoCells) du deuxième type (InfoType) dans une structure arborescente d'attributs possèdent le même numéro d'identification (ID), et où l'autre structure arborescente équilibrée supplémentaire comporte un ensemble supplémentaire de pointeurs (LHR, RHR) qui relient les éléments de données (InfoCells) du deuxième type (InfoType) appartenant à l'enregistrement de données représenté par l'élément de données associé du troisième type (InfoCourse) ; et
relier un élément de données du premier type (InfoCluster) à un élément de données du deuxième type (InfoType) et à un élément de données du troisième type (InfoCourse) par l'intermédiaire d'un point d'ancrage.
